Europäisches Patentamt

European Patent Office

Office européen des brevets

(19)

(11) Veröffentlichungsnummer: **0 019 645**
A1

(12) # EUROPÄISCHE PATENTANMELDUNG

(21) Anmeldenummer: **79101611.6**

(22) Anmeldetag: **26.05.79**

(51) Int. Cl.³: **C 03 B 5/02,** F 27 D 11/00, F 27 B 3/08

(43) Veröffentlichungstag der Anmeldung: **10.12.80**
**Patentblatt 80/25**

(84) Benannte Vertragsstaaten: **AT CH DE FR GB IT NL SE**

(71) Anmelder: **Sorg GmbH & Co. KG, Postfach 520, D-8771 Pflochsbach (DE)**
Anmelder: **Eurofours Sociéte Anonyme, Rue du Couvent 174, B-4500 Jupille s/Meuse (BE)**

(72) Erfinder: **Pieper, Helmut, Buchenweg 19, D-8770 Lohr/Main (DE)**
Erfinder: **Cransveld, Joseph Pierre, 35 rue de L'eglise, B-5800 Gembloux (BE)**

(74) Vertreter: **Schulze Horn, Stefan, Dipl.-Ing. et al, Goldstrasse 36, D-4400 Münster (DE)**

(54) **Elektrisch beheizter Schmelzofen für aggressive Mineralstoffe mit steiler Viskositätskurve.**

(57) Elektrisch beheizter Schmelzofen für aggressive Mineralstoffe mit steilen Viskositätskurven, insbesondere bestehend aus einem Gemisch von Flugasche und Kalk sowie möglicherweise Sand für die Zementherstellung, mit einem von einem Stützgerüst (2) gehaltenem Mauerwerk (1) aus feuerfestem Material, welches sich um eine vertikale Achse dreht, falls nicht die Ofendecke (16) drehbar ausgebildet ist mit Elektroden (5) zur Einleitung von elektrischer Energie in die Schmelze (3) sowie Mitteln zum Auflegen des Gemenges auf die Schmelze (3), wobei die Elektroden (5) mit erheblicher Länge in die Schmelze (3) ragen und der Ofen einen Grundriß in Form eines Kreises oder regelmäßigen Vielecks mit hoher Eckenzahl aufweist und weiterhin in der Wannenmitte ein mit einem Mitteldurchlaß (7) versehener Auslaß (6) angeordnet ist, der nach oben in die Schmelze (3) ragt und dessen Auslaufoberkante sich bis dicht unter die Badoberfläche erstreckt.

# Elektrisch beheizter Schmelzofen für aggressive Mineralstoffe mit steiler Viskositätskurve

Die Erfindung betrifft einen elektrisch beheizten Schmelzofen zum Schmelzen von insbesondere aggressiven Mineralstoffen mit steiler Viskositätskurven, mit einem von einem Stützgerüst gehaltenem Mauerwerk aus feuerfestem Material und Elektroden zur Einleitung elektrischer Energie in die Schmelze und Mitteln zum Auflegen des Gemenges auf die Schmelze.

Es ist bereits seit langem bekannt, mineralische Stoffe und insbesondere Gläser in vollelektrisch arbeitenden Schmelzwannen zu erschmelzen. Diese als konventionell zu bezeichnenden Schmelzwannen weisen aber den Nachteil auf, daß sie aufgrund ihrer Konstruktion nicht dazu geeignet sind, hochaggressive Schmelzen zu verarbeiten und insbesondere Gemische aufzuschmelzen, die einen relativ hohen Schmelzpunkt haben und dabei noch eine relativ niedrige Leitfähigkeit und sehr steile Viskositätskurve besitzen. Unter steiler Viskositätskurve ist zu verstehen, daß geringe Temperaturänderungen hohe Viskositätsänderungen bewirken, d. h. im Gegensatz zu herkömmlichem Glas ändern sich die Viskositätswerte bis zur Dünnflüssigkeit schon bei relativ geringen Temperaturerhöhungen. Eine weitere Schwierigkeit im Schmelzen der genannten Gemische besteht darin, daß mit rein konventioneller Schmelztechnik, d. h. mit Brennerheizung nicht gearbeitet werden kann, weil die Durchstrahlungsmöglichkeiten sehr gering sind, so daß schon bei geringen Schichtdecken von weniger als 10 cm die Strahlung weitgehend absorbiert wird, untere Schichten also nicht mehr genügend erwärmt werden können.

Es ist jetzt Aufgabe der Erfindung, eine Schmelzwanne zum Erschmelzen der vorgenannten schwer zu erschmelzenden Gemische zu schaffen, wobei insbesondere ein Ge-

misch aus Flugasche, Kalk und evtl. Sand geschmolzen werden soll, das danach frittiert wird.

Der erfindungsgemäße Ofen soll dabei an die an ihn gestellten Aufgaben besonders gut angepaßt sein und es ermöglichen, trotz der Aggressivität der Schmelze eine genügend lange Lebensdauer aufzuweisen und trotz der ungünstigen Viskosität-Temperaturverhältnisse eine Einstellung der gewünschten Schmelzbadtiefe und einen geregelten Schmelzabzug zu ermöglichen. Gemische der vorgenannten Zusammensetzung, wie sie z.B. gemäß der deutschen Patentschrift 2 122 027 zu Zement weiterverarbeitet werden können, nachdem sie aufgeschmolzen wurden, gelten bisher als nicht großtechnisch schmelzbar. Es ist die besondere Aufgabe der Erfindung, einen Schmelzofen zu schaffen, der die großtechnische Schmelze wirtschaftlich ermöglicht, wobei der Ofenbetrieb so sicher sein soll, daß er auch von relativ ungeschultem Personal in Entwicklungsländern betrieben werden kann und wobei die Zusammensetzung des zu erschmelzenden Gemisches von Fall zu Fall unterschiedlich sein kann.

Diese vorgenannte Aufgabe wird bei dem eingangs genannten Ofen erfindungsgemäß dadurch gelöst, daß die Elektroden mit erheblicher Länge in die Schmelze ragen und in der Wannenmitte ein mit einem Mitteldurchfluß versehener Auslaß angeordnet ist, der nach oben in die Schmelze ragt und dessen Oberrand sich bis dicht unter die Badoberfläche erstreckt und das Stützgerüst auf Rollen gelagert mit dem Ofenmauerwerk um eine vertikale Achse drehbar ist, während die Decke des Ofens fest angeordnet ist und in radialer Anordnung Mittel zur Aufgabe des Gemenges aufweist.

Vorteilhaft weist der Ofen einen Grundriß in Form eines Kreises oder regelmäßigen Vielecks mit hoher Eckenzahl auf und zur Einstellung einer kühleren Randzone der Ofenfüllung zur Schonung des Wandungsmaterials kann die Ofenwandung im Bereich der Schmelze von unten nach oben schräg nach außen und darüber senkrecht verlaufen.

Um eine hohe Korrosion im Bereich des Auslasses zu vermeiden, wiest dieser in seinem oberen Bereich von außen nach innen schräg und nach oben verlaufende Kanäle auf, die oben dicht unterhalb der Schmelzbadoberfläche in einer Mittelbohrung des Auslasses enden. Der Aufbau und die Mittelbohrung sind bis in die Höhe der Decke geführt. Unterhalb des Auslasses können Gas- oder Öl- brenner angeordnet sein, deren Abgase nach oben durch die Mittelbohrung abströmen können. Alternativ können in einer anderen Ausführungsform in der Mittelbohrung hängende Heizelemente angeordnet sein.

Vorteilhaft zur Vermeidung von heißen Zonen in den Randbereichen sind die Elektroden in dem Wannenboden oder in der Decke eingesetzt und sind in mindestens zwei konzentrischen Ringen zum Auslaß mit erheblichem Abstand zu diesem und der Außenwandung angeordnet.

Zur Aufgabe des Gemenges in den Bereichen zwischen der Außenwandung und dem Auslaß ist der Ofen vorteilhaft von einer sich drehenden Decke abgedeckt, die Öffnungen und Mittelaufweist, um das Gemenge auf die Schmelze nach den Erfordernissen verteilt aufzugeben, falls nicht das Stützgerüst drehbar angeordnet ist und damit der ganze Ofen gedreht werden kann. Die Decke wird dann ortsfest ausgeführt und weist radial angeordnete Beschikkungsöffnungen und -mittel auf. Auch die Elektroden können dann in der Decke angeordnet sein.

Das Prinzip der genannten Drehdecke wird im einzelnen in der europäischen Patentanmeldung 78 200 395.8, Anmelderin Sorg GmbH & Co. KG, näher beschrieben, so daß auf eine ins Einzelne gehende Beschreibung verzichtet werden kann.

Im folgenden wird ein Ausführungsbeispiel der Erfindung anhand von Zeichnungen näher beschrieben. Es zeigen:

Figur 1   einen erfindungsgemäßen Ofen schematisch im Vertikalschnitt,

Figur 2   einen schematischen Schnitt durch den Ofen gemäß Figur 1 in einer Horizontalebene und

Figur 3   schematisch einen Schnitt gemäß Figur 1, aber mit in der Decke angeordneten Elektroden.

Die erfindungsgemäße Schmelzwanne wird im wesentlichen mit denjenigen Wandungsteilen, die mit der Schmelze oder dem erweichten Gemenge in Berührung kommen, aus Magnesit-Chromsteinen aufgebaut, falls nicht ein Chrom-Osyd-Stein verwendet wird. Es hat sich gezeigt, daß diese Materialien bei Einhaltung einer nicht zu hoch angesetzten Temperatur, d. h. bei Temperaturen von nicht mehr als 1350 - 1400$^{\circ}$ C eine genügende Standzeit aufweisen, um einen befriedigenden Ofenbetrieb aufrecht zu erhalten. Erfindungswesentlich ist es daber aber, daß der Elektrodenabstand zu den Wänden in jedem Fall ausreichend gewählt wird, um zu gewährleisten, daß an der Wand eine kalte Schmelze bzw. ein kaltes Glas, evtl. sogar eine auskristallisierte Phase gebildet wird.

Im erfindungsgemäßen Zusammenhang kann die Schmelze auch als Glas bezeichnet werden, da ein sehr hoher Glasanteil des erschmolzenen Gemenges vorliegt.

Der Vorgang des Ausbildens einer kühlen Zone an den Wandungen und oberhalb des Ofenbodens wird dadurch unterstützt, daß mit Hilfe der Decke und der Drehbewegung entweder des Ofens oder der Decke das weitaus meiste Material an der äußeren Peripherie aufgegeben wird, so daß, wenn es zum Erweichen im Randbereich kommt, das darüberliegende Material sofort nachdrückt und dieser Bereich wieder mit ungeschmolzenem Material gefüllt wird.

Aufgrund der steilen Viskositätskurve der Schmelze ist zum Auslaß des Glases in der Wannenmitte ein Turm aus Chrom-Oxyd-Steinen eingesetzt, welcher aus Einzelblöcken aufgebaut und danach aufgebohrt worden ist. Der Turm bzw. Auslaß 6 weist neben dem mittleren, vertikal verlaufenden Mitteldurchlaß 7 eine Anzahl von schräg aussen nach oben innen verlaufenden Kanälen 8 auf, die in der Mittelbohrung enden.

Auf diese Weise wird verhindert, daß etwa ungeschmolzenes Material mit der Schmelze aus der Gemengedecke abgezogen wird. Erfindungsgemäß kann aber eine gewisse Menge ungeschmolzenem Materials, etwa bis max. 5 % mit der Schmelze abgezogen werden; bei flacher Anordnung der Kanäle kann auch ungeschmolzenes Material mit abgezogen werden. Der erfindungsgemäße Schmelzofen ist in konventioneller Weise aufgebaut, d. h. das Mauerwerk der Ofenwandung und des Ofenbodens wird von einem äußeren Stützgerüst aus geeigneten Eisen- und Stahlträgern gehalten. Das Mauerwerk wird dabei mit 1 und das Stützgerüst mit 2 bezeichnet. Innerhalb des Ofens liegt der Bereich der Schmelze 3 vor, auf welchen das Gemenge 4 aufgelegt wird. Die Elektroden 5 sind in einem oder mehreren konzentrischen Ringen rings um den Auslaß angeordnet, sie durchstoßen den Ofenboden oder die Decke 16 und ragen im erheblichem Umfang in die Schmelze hinein. Da bei den Elektroden der Bereich der höchsten Energiedichte an ihren Spitzen vorliegt, wird damit gewährleistet, daß die meiste Energie in den Bereichen fern von dem Ofenboden und den Materialien der Wandung und des Auslasses freigesetzt wird, daß also die notwendige hohe Schmelztemperatur hier erreicht wird und die Wandmaterialien noch genügend thermisch abgeschirmt sind.
Das Gemenge bzw. die Schmelze bilden also eine Schutzschicht mit nach außen sinkender Temperatur, so daß die
Wandtemperatur die zulässigen Werte nirgendwo überschreitet. Der Auslaß selbst, der aus Chrom-Oxyd-Steinen
besteht, kann dabei thermisch höher belastet werden als
die genannten Magnesit-Chrom-Steine, aus denen vorzugsweise die Ofenwand und der Ofenboden bestehen.

Die eingesetzten Elektroden 5 weisen einen relativ
großen Durchmesser von 60 - 80 mm auf und sind mit einer
Innenkühlung versehen, wie sie ansich bekannt ist. Die
Elektrodenschaltung ist dabei so, daß nebeneinander
Elektroden verschiedener Phasen angeordnet sind, so daß
der Hauptstromfluß immer von einer Elektrode zu der
dieser benachbarten erfolgt. Durch diese Maßnahme wird
die Energie praktisch in konzentrischen Ringen rings
um den Durchlaß frei, um den Auslaßbereich  thermisch
zu entlasten.

Um die genügend hohe Schmelztemperatur der Schmelze
einzustellen, ist die gesamte freie Oberfläche der
Schmelze mit einer Gemengeschicht bedeckt. Um zu verhindern, daß der Anteil des nicht geschmolzenen Materials beim Abzug zu groß wird, weist daher der Mitteldurchlaß die genannten schrägen Kanäle 8 auf, die in
der Mittelbohrung 17 enden, so daß ein Überströmen von
Material bzw. ein Eindringen des Gemenges von oben
sicher verhindert wird.

Über die schrägen Kanäle gelangt jetzt ausschließlich
geschmolzenes Material aus dem Schmelzbereich in den
Auslaß 6 und durch den Unterrand des Mitteldurchlasses
7 regelt sich der Glasstand bzw. Schmelzenstand in
dem Ofen automatisch, ohne daß ein Speiser und eine
Glasstandsanzeige notwendig würden. Über den freiliegenden Überlauf läuft vielmehr so viel geschmolzenes Material ab, wie an Gemenge eingelegt wird. Die Badtiefe der Wanne ist dabei so groß, daß am Boden wie an den Wanden eine kalte Phase, evtl. eine Auskristallisierung des Materials zur Einstellung einer Isolationsschicht stattfindet.

Durch die Anordnung der Elektroden in zwei Ringen kann die Strömung von der Mitte weg oder zur MItte hin beeinflußt werden, falls die inneren Elektroden stärker mit elektrischer Energie beaufschlagt werden, ergibt es dort eine stärkere Aufströmung, so daß Oberflächenglas vom Zentrum der Wanne fortgedrückt wird. Dadurch läßt sich in gewisser Weise das Schwimmen des Gemenges zur Mitte hin oder zum Rand hin steuern.

Weiterhin kann dadurch erreicht werden, daß bei den äußeren Elektroden die Temperatur niedriger liegt, so daß Material dort nur angeschmolzen wird, während bei dem inneren Elektrodenring die endgültige Aufschmelzung erfolgt.

Um in dem Mitteldurchlaß 7 die für das Ausströmen des geschmolzenen Gemenges erforderliche Temperatur einstellen zu können, ohne daß der Auslaß 6 überhitzt, sind unten in dem Auslaß 6 Gas- oder Ölbrenner 13 angeordnet, die seitlich von dem durchfließenden Material in einer Öffnung 12 in dem Feuerfestmaterial sitzen. In dem Auslaß 6 sind weiterhin mit Kühlmittel durchflossene Leitungen 14 vorhanden, die die Temperatur auf einem vorgegebenen Bereich halten. In einer weiteren Ausgestaltung des Auslasses werden Heizelemente 17 von oben in diesen gehängt.

Der Ofen selbst wird nach oben von einer Drehdecke 16 abgeschlossen. Da der Auslaufteil durch die Drehdecke ragt, kann nach Absenken des Schmelzpegels eine Reparatur oder Inspektion des Auslasses 6 ohne Schwierigkeiten vorgenommen werden. Dieser Teil ist thermisch am meisten belastet und wird daher ggf. am häufigsten zu reparieren oder auszuwechseln sein. Die Drehdecke 16 weist im übrigen in bekannter Weise, wie dies z.B. in der Anmeldung 78 200 395.8 im Detail beschrieben ist, Mittel zum Auflegen des Gemenges auf die Badoberfläche an gewünschten Stellen in beliebiger Menge auf. Diese Mittel bestehen aus Zwischenförderern und Bunkern, aus denen durch in der Decke angeordnete, abgedeckte Öffnungen das Gemenge aufgegeben wird. Die Drehdecke dreht sich kontinuierlich um eine vertikale Achse oberhalb des Gemenges, so daß jede der Öffnungen einen zur Drehachse konzentrischen Kreis überstreicht und durch das Mengenverhältnis des Gemenges in den verschiedenen Kreisbereichen kann eine beliebige Gemengeaufgabe auf die Gemengedecke erfolgen. Hinsichtlich der Einzelheiten wird ausdrücklich auf die genannte europäische Patentanmeldung verwiesen.

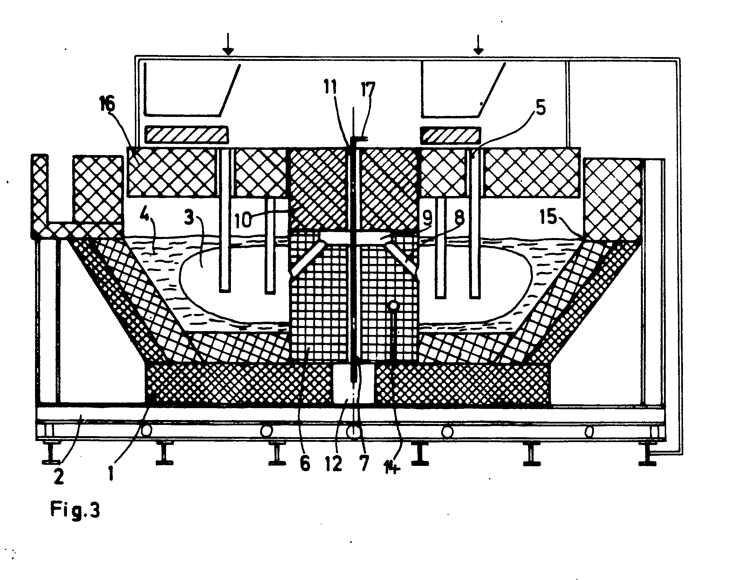

Gemäß Figur 3 sind in die Drehdecke weiterhin die Elektroden 5 eingesetzt, die von oben in das Schmelzbad hineinhängen und über die in bekannter Weise die Schmelzenergie zugeführt wird. Die Elektroden hängen dabei in erheblichem Maße in die Schmelze hinein, ihre Spitzen weisen aber ebenfalls einen erheblichen Abstand von dem Ofenboden auf, um diesen thermisch nicht in zu großem Maße zu belasten. Die Elektroden bewirken dabei eine gewisse Rührwirkung, welche das Aufschmelzen des Gemenges erleichtert. Die Zuführung der elektrischen Energie zu den Elektroden bzw. Elektrodenhaltern kann bei der sich drehenden Decke 16 sowohl über nicht gezeigte Schleifringe erfolgen, die Zuführung kann aber auch mittels flexibler Kabel durchgeführt werden, wobei dann allerdings die Drehbewegung nur um einen bestimmten Winkel z. B. $180^{\circ}$ erfolgt. Nach Durchlaufen dieses Winkels, der auch $360^{\circ}$ betragen kann, wird die Drehbewegung dann umgesteuert und die Decke bewegt sich rückwärts. Die Kabel können die Drehbewegung unter diesen Umständen mit vollziehen.

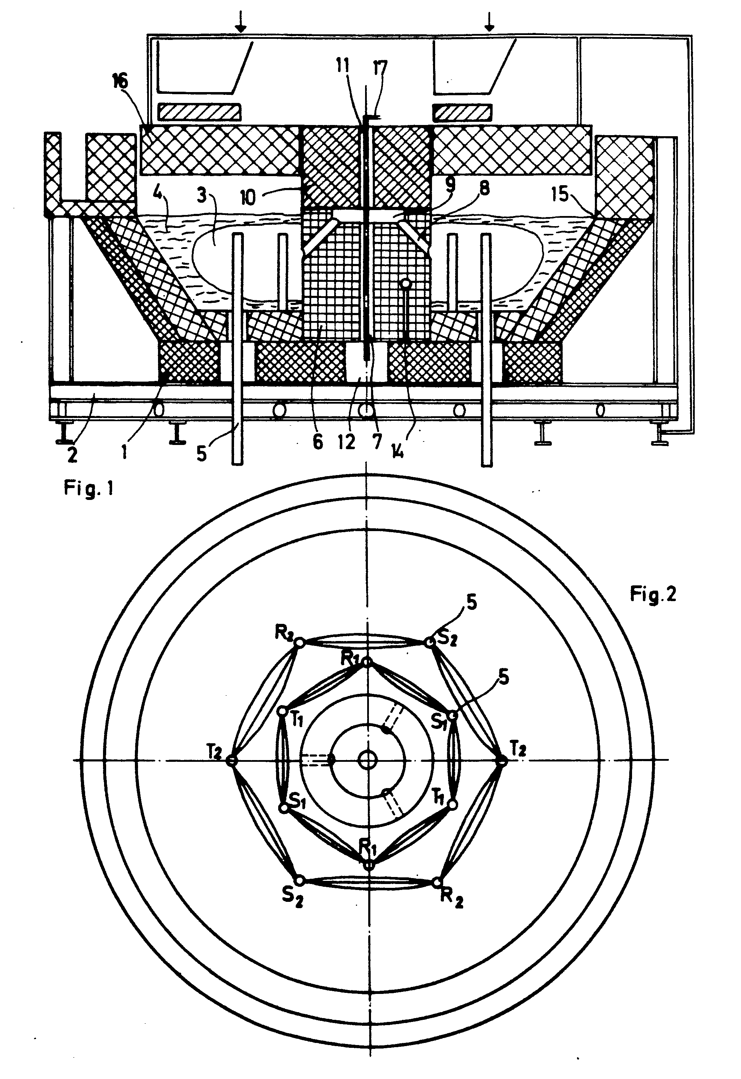

Eine alternative Lösung ist in der Figur 1 dargestellt, wobei der gesamte Ofen gedreht wird, die Decke 16 aber ortsfest ist. Die Decke 16 kann in diesem Fall ebenfalls die Elektroden aufweisen, diese können aber auch unten in dem Ofen eingesetzt sein. Je nach Art der Zuführung der elektrischen Energie zu den Elektroden wird dabei eine kontinuierliche Drehung durchgeführt bzw. wie bereits vorstehend beschrieben,ist eine Bewegung nur um einen bestimmten Winkel, z. B. 180 oder 360° vorhanden. Bei der Vor- und Zurückdrehung des Ofens können dabei wiederum flexible Kabel verwendet werden, während bei einer kontinuierlichen Drehbewegung die Stromzuführung über Schleifkontakte an Stromschienen erfolgen würde. Die einfachste Ausgestaltung des erfindungsgemäßen Ofens in seiner drehbaren Form wird aber dadurch erreicht, daß die Elektroden in der ortsfest und mit Beschickungsmitteln in radialer Anordnung versehenen Decke angeordnet sind. In diesem Fall ist auch das hängende Heizelement 17 ortsfest, während sich der Auslaß 6 mit dem Ofen mitdreht. Diese Ausbildung weist den Vorteil auf, daß sämtliche Stromzuführungen und die Beschickungsmittel stehen, während sich der Ofen kontinuierlich drehen kann. Das Stützgerüst wird dann in diesem Fall von Rollen oder Rädern getragen, die auf einer runden Schiene umlaufen. Die Drehbewegung des Ofens wird dabei wie bei einer Drehung der Decke durch nicht gezeigte Antriebsmittel erreicht.

Mit dem erfindungsgemäßen Ofen wird erstmalig die Möglichkeit eröffnet, auch sehr schwer zu schmelzende Gemische, die hoch aggressiv sind und sehr steile Viskositätskurven aufweisen, in wirtschaftlicher Weise zu schmelzen. Damit wird eine Möglichkeit gegeben, das Grundmaterial zur Weiterverarbeitung zu Zement aus Flugasche, Kalk und evtl. Sand zu schaffen bzw. Flugasche zu einem nicht Grundwasser gefährdenden Deponat umzuschmelzen.

Der erfindungsgemäße Ofen eignet sich auch zur Beseitigung von Flugasche, speziell socher, die Grundwasser gefährdend ist, indem die Flugasche in dem Ofen zu einem deponablem Stoff umgeschmolzen wird.

Zu diesem Zweck sind die Kanäle 8 nicht geneigt, sondern verlaufen waagerecht oder flach und das Gemenge wird im äußeren Bereich der Decke aufgegeben, so daß durch die Kanäle eine gewisse Menge ungeschmolzenen Materials mit abgezogen wird. Dieses Gemenge braucht energiesparend dann nicht aufgeschmolzen werden, wird aber in die geschmolzenen Materialanteile eingeschmolzen. Bei der genannten flachen bis waagerechten Kanallage werden die schwer schmelzenden Bestandteile nicht geschmolzen, dafür wird rings um den Auslaß in variabler Entfernung kein Gemenge aufgegeben, so daß die Verweilzeit nur zum Schmelzen der leicht schmelzenden Bestandteile ausreicht. Die Verweilzeit ist über die Entfernung der Gemengeaufgabe einstellbar, wobei die schwer schmelzenden Bestandteile auf der Schmelze schwimmen und mit dieser in den Auslaß eingesogen werden.

Der erfindungsgemäße Ofen ist also in doppelter Weise einsetzbar.

Patentansprüche:

1. Elektrisch beheizter Schmelzofen zum Schmelzen von insbesondere aggressiven Mineralstoffen mit steilen Viskositätskurven, mit einem von einem Stützgerüst gehaltenem Mauerwerk aus feuerfestem Material und Elektroden zur Einleitung von elektrischer Energie in die Schmelze und Mitteln zum Auflegen des Gemenges auf die Schmelze, dadurch gekennzeichnet, daß die Elektroden (5) mit erheblicher Länge in die Schmelze (3) ragen, in der Wannenmitte ein mit einem Mitteldurchlaß (7) versehener Auslaß (6) angeordnet ist, der nach oben durch die Schmelze (3) ragt und dessen Auslaufoberkante sich bis dicht unter die Badeoberfläche erstreckt und das Stützgerüst (2) auf Rollen gelagert mit dem Ofenmauerwerk um eine vertikale Achse drehbar ist, während die Decke des Ofens fest angeordnet ist und in radialer Anordnung Mittel zur Aufgabe des Gemenges aufweist.

2. Schmelzofen nach Anspruch 1, dadurch gekennzeichnet, daß der Ofen einen Grundriß in Form eines Kreises oder regelmäßigen Vielecks mit hoher Eckenzahl aufweist und die Ofenwandungen im Bereich der Schmelze von unten nach oben schräg nach außen und darüber senkrecht verlaufen.

3. Schmelzofen nach Anspruch 1 oder 2, dadurch gekennzeichnet, daß der Auslaß (6) in seinem oberen Bereich von außen nach innen schräg nach oben verlaufende Kanäle (8) aufweist, die oben dicht unterhalb der Badoberfläche in den Mitteldurchlaß (7) münden.

4. Schmelzofen nach Anspruch 3, dadurch gekennzeichnet, daß der Auslauf mit der Mittelbohrung bis über die Ofendecke hinausragt.

5. Schmelzofen nach Anspruch 4, dadurch gekennzeichnet, daß der Auslauf eine Öffnung (11) aufweist, durch welche hängende Heizelemente (17) bis zum unteren Auslaufende hindurch geführt sind.

6. Schmelzofen nach Anspruch 1 bis 5, gekennzeichnet durch kühlmitteldurchflossene Leitungen (14) innerhalb des Auslasses (6).

7. Schmelzofen nach Anspruch 1 bis 6, dadurch gekennzeichnet, daß die Elektroden (5) durch den Wannenboden ragen und in mindestens zwei konzentrischen Ringen zum Auslaß (6) mit erheblichem Abstand zu diesem und der Außenwandung angeordnet sind.

8. Schmelzofen nach Anspruch 1 bis 6, dadurch gekennzeichnet, daß die Elektroden (5) die Decke (16) durchdringen und von oben in die Schmelze eingeführt sind.

9. Schmelzofen nach Anspruch 8, dadurch gekennzeichnet, daß der Auslaß durch eine Öffnung der Decke (16) ragt.

10. Schmelzofen nach Anspruch 1 bis 7, dadurch gekennzeichnet, daß die Elektroden (5) die ortsfest angeordnete Decke (16) durchdringen, die Decke (16) in radialer Anordnung Mittel zur Auf-

0019645

gabe des Gemenges auf die Schmelze aufweist und der Ofenkörper mit samt seinem Stützgerüst (2) auf Rollen oder Rädern verdrehbar ist.

11. Schmelzofen nach Anspruch 8, dadurch gekennzeichnet, daß das Stützgerüst (2) ortsfest ist und die Decke mit den Elektroden und den Gemengebindungsmitteln gedreht wird.

12. Schmelzofen nach Anspruch 1 - 11, dadurch gekennzeichnet, daß die Kanäle (8) des Auslasses (6) waagerecht verlaufen.und die Mittel zur Aufgabe des Gemenges auf der Decke (16) an deren äußeren Peripherie angeordnet sind.

Fig. 1

Fig. 2

Fig.3

**Europäisches Patentamt**

**EUROPÄISCHER RECHERCHENBERICHT**

00419645

Nummer der Anmeldung

EP 79 101 611.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 1 290 742 (LE CLERC DE BUSSY)  * Anspruch 1 *  -- | 1,2, 5-7 |
| A | DE - B - 1 211 363 (VERRERIES POCHET ET DU COURVAL)  * Ansprüche *  -- | 1,2,4, 8,9,12 |
| A | US - A - 3 659 029 (LE CLERC DE BUSSY)  * Anspruch 1 *  -- | 1,2,4, 6,7 |
| A | DE - C - 709 409 (N.V.M. TOT BEHEER EN EXPLOITATIE VAN OCTROOIEN)  * Ansprüche; Fig. 2 *  -- | 1,4,5, 9 |
| A | US - A - 3 328 153 (AUGSBURGER)  * Fig. 2 *  -- | 7 |
| A | DE - C - 492 776 (CORNELIUS)  * Fig. *  -- | 3 |
| A | DE - A - 2 151 896 (VEB KOMBINAT TECHNISCHES GLAS)  * Fig. 2 *  -- | 1,2 |
| A | AT - B - 35 745 (TREUHAND-VEREINIGUNG AG)  * Fig. 2 *  --         ../.. | 1,2 |

**KLASSIFIKATION DER ANMELDUNG (Int.Cl.³)**

C 03 B 5/02

F 27 D 11/00

F 27 B 3/08

**RECHERCHIERTE SACHGEBIETE (Int. Cl.³)**

C 03 B 3/00

C 03 B 5/00

F 27 B 3/00

F 27 D 11/00

H 05 B 7/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 06-12-1979 | HÖRNER |

EPA form 1503.1  06.78

**Europäisches Patentamt**

**EUROPÄISCHER RECHERCHENBERICHT**

0019645

Nummer der Anmeldung

EP 79 101 611.6
- Seite 2 -

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| E,D | EP - A1 - 0 003 247 (SORG) <br><br> * Anspruch 1 * <br><br> ---- | 11 |

**KLASSIFIKATION DER ANMELDUNG (Int.Cl.²)**

**RECHERCHIERTE SACHGEBIETE (Int. Cl.³)**